# EUROPÄISCHE PATENTSCHRIFT

(11) **EP 2 740 070 B1**
(45) Veröffentlichungstag und Bekanntmachung des Hinweises auf die Patenterteilung: **10.10.2018**
(21) Anmeldenummer: 12746278.6
(22) Anmeldetag: 01.08.2012
(51) Int. Cl.: G06F 21/85

(54) **MECHANISMUS ZUR KOMMUNIKATION ZWISCHEN ZWEI APPLIKATIONEN AUF EINEM SICHERHEITSMODUL**
MECHANISM FOR COMMUNICATING BETWEEN TWO APPLICATIONS ON A SAFETY MODULE
MÉCANISME DE COMMUNICATION ENTRE DEUX APPLICATIONS SUR UN MODULE DE SÉCURITÉ

(30) Priorität: 03.08.2011 DE 102011109318
(43) Veröffentlichungstag der Anmeldung: 11.06.2014
(73) Patentinhaber: Giesecke+Devrient Mobile Security GmbH, 81677 München (DE)
(72) Erfinder: TREGER, Jörn, 83022 Rosenheim (DE)
(86) Internationale Anmeldenummer: PCT/EP2012/003271
(87) Internationale Veröffentlichungsnummer: WO 2013/017271

(56) Entgegenhaltungen:
- US-A1- 2008 163 247
- Wolfgang Rankl ET AL: "Handbuch der Chipkarten" In: "Handbuch der Chipkarten", 1. Juni 2006 (2006-06-01), Hanser Verlag, München, XP055047235, ISBN: 978-3-44-622036-2 Seiten 429-433, das ganze Dokument

## Beschreibung

Die Erfindung betrifft ein Verfahren zum Betreiben eines Sicherheitsmoduls, mit den Schritten des Übertragens von Daten von einer ersten Applikation zu einer zweiten Applikation in dem Sicherheitsmodul und des Verwendens der übertragenen Daten in der zweiten Applikation. Die Erfindung betrifft weiter ein Sicherheitsmodul mit einer physischen Schnittstelle zu einem externen Terminal und einem Betriebssystem zur Ausführung von Applikationen, wobei das Sicherheitsmodul angepasst ist, eine Kommunikation zwischen den Applikationen zu unterstützen.

In der Regel ist es Applikationen eines Sicherheitsmoduls nicht möglich, Daten mit anderen Applikationen des Sicherheitsmoduls auszutauschen. Dies ist jedoch wünschenswert, um die Funktionalität von Applikationen eines Sicherheitsmoduls erweitern zu können. Eine bekannte Möglichkeit, Daten zwischen zwei Applikationen auszutauschen, ist das sog. "Sharable Interface". Die Verwendung dieser Schnittstelle weist jedoch den Nachteil auf, dass die aus einer Applikation aufgerufene Applikation eine Schnittstelle zur Verfügung stellen muss. Darüber hinaus ist die aufgerufene Funktion bei der Abarbeitung nicht selektiert, wodurch die Verwendung eines Clear on Deselect (CoD)-Speichers nicht möglich ist.

Aus der US 7,127, 605 B1 ist es bekannt, das "Sharable Interface" für die Kommunikation zwischen zwei Applikationen zu verwenden. Die Applikationen können Methoden auf sichere Weise austauschen, indem diese sog. "Delegates" nutzen, welche eine Sicherheitsrichtlinie der die Methode zur Verfügung stellenden Applikation sicherstellt.

Die WO 01/39427 A1 offenbart zum Austausch von Kommandos zwischen Applikationen die Verwendung eines Mittlers, indem ein Speicherbereich als Meldungsbox für auszutauschende Datenobjekte dient. Zwischen den Applikationen muss somit eine interne Schnittstelle in dem Sicherheitsmodul vorgesehen werden.

Das in der EP 0 985 202 B1 beschriebene Verfahren nutzt einen öffentlichen Bereich eines flüchtigen Speichersegments zum Austauschen von Daten zwischen einer laufenden Anwendung und einer Schnittstelle sowie zum Austauschen von Daten zwischen Anwendungen. Der Austausch erfolgt dabei durch das Ausführen eines Delegierungsbefehls in der ersten Anwendung, infolge dessen der zweiten Anwendung Daten der ersten Applikation zur Bearbeitung zur Verfügung gestellt werden. Auch bei dieser Ausgestaltungsvariante wird somit auf eine interne Schnittstelle zurückgegriffen.

US 2008/01632347 führt zum Anzeigen von Daten einer primären, nicht mit der Steuerung der Anzeige vertrauten Anwendung in der Anzeigesteuerung eine Umleitungsinstanz für APDUs ein. Eine sekundäre Anzeige-Anwendung kann somit über die Umleitungsinstanz mit Hilfe von APDUs die anzuzeigenden Daten der primären Anwendung auslesen.

Es ist Aufgabe der vorliegenden Erfindung, ein Verfahren und ein Sicherheitsmodul anzugeben, mit denen der Austausch von Daten zwischen Applikationen des Sicherheitsmoduls auf einfachere und flexiblere Weise durchgeführt werden kann. Insbesondere soll ein Inter-Applikationsdatenaustausch auch dann möglich sein, wenn eine Applikation erst nachträglich in das Sicherheitsmodul eingebracht wird.

Diese Aufgaben werden gelöst durch den Gegenstand der unabhängigen Ansprüche. Vorteilhafte Ausgestaltungen ergeben sich aus den abhängigen Patentansprüchen. Eine Ausgestaltung der Erfindung beinhaltet unter anderem ein Verfahren zum Betreiben eines Sicherheitsmoduls, mit den Schritten: Übertragen von Daten von einer ersten Applikation zu einer zweiten Applikation in dem Sicherheitsmodul und Verwenden der übertragenen Daten in der zweiten Applikation. Das Verfahren zeichnet sich dadurch aus, dass die übertragenen Daten ein Kommando für die zweite Applikation umfassen und die zweite Applikation das Kommando in dem Schritt des Verwendens ausführt. In dem Schritt des Übertragens ruft die erste Applikation eine interne Umleitung zu der zweiten Applikation auf. Das Sicherheitsmodul leitet das Kommando intern so um, dass es durch die zweite Applikation als herkömmliches, wie ein von außerhalb des Sicherheitsmoduls erhaltenes Kommando empfangen wird.

Die Erfindung schafft weiter ein Sicherheitsmodul mit einer physischen Schnittstelle zu einem externen Terminal und einem Betriebssystem zur Ausführung von Applikationen, wobei das Sicherheitsmodul angepasst ist, eine Kommunikation zwischen den Applikationen zu unterstützen. Das Sicherheitsmodul zeichnet sich dadurch aus, dass dieses ein internes, virtuelles Terminal aufweist. Das Sicherheitsmodul ermöglicht die Kommunikation zwischen den Applikationen auf dem Sicherheitsmodul durch das virtuelle Terminal.

Durch die Erfindung wird einer Applikation in dem Sicherheitsmodul der Aufruf eines karteninternen, virtuellen Kartenlesers ermöglicht, welcher mittels herkömmlicher Kommandos mit einer anderen Applikation kommunizieren kann. Der Vorteil besteht darin, dass das Betriebssystem des Sicherheitselements den virtuellen Kartenleser wie jede andere Schnittstelle, bspw. ein kontaktloses oder kontaktbehaftetes Interface, behandeln kann. Durch die interne Umleitung eines Kommandos von einer ersten zur zweiten Applikation ist bspw. eine Interapplikationskommunikation über die in dem Sicherhejtselement bereits vorhandene APDU-Schnittstelle sowie die Nutzung eines Clear on Deselect (CoD)-Speichers eines Sicherheitsmoduls möglich.

Darüber hinaus ergeben sich erweiterte Funktionalitäten für den Betrieb der Applikationen, die nachfolgend näher beschrieben werden.

Es ist insbesondere vorgesehen, dass das von der zweiten Applikation empfangene Kommando wie das herkömmliche Kommando durch die zweite Applikation verarbeitet wird. Aus Sicht der zweiten Applikation ergibt sich somit kein Unterschied im Vergleich zu einer herkömmlichen Situation, in der die zweite Applikation ein Kommando vom Betriebssystem der Karte empfängt. Dementsprechend verarbeitet sie dieses in der üblichen Weise.

Zweckmäßigerweise wird das Kommando an einer APDU (Application Protocol Data Unit)-Schnittstelle der zweiten Applikation empfangen. Dies und das Vorsehen der internen Umleitung eines Kommandos über ein virtuelles Terminal ermöglicht die Interapplikationskommunikation zwischen zwei Applikationen des Sicherheitselements.

Es ist weiterhin zweckmäßig, wenn die APDU-Schnittstellen der ersten und der zweiten Applikation parallel aktiv sind, über welche das Kommando von der ersten an die zweite Applikation übertragen wird. Diese Ausgestaltung ermöglicht die Interapplikationskommunikation zwischen der ersten und der zweiten Applikation. Dabei kann der eingangs bereits erwähnte "Clear on Deselect"-Speicher genutzt werden.

In einer weiteren Ausgestaltung erfolgt die interne Umleitung des Kommandos über ein virtuelles Terminal des Sicherheitsmoduls, welche das von der ersten Applikation empfangene Kommando über eine virtuelle Schnittstelle an die zweite Applikation sendet. Die virtuelle Schnittstelle kann bspw. in Gestalt einer Terminal-API (Application Programmable Interface) vorliegen.

In einer Ausgestaltung des erfindungsgemäßen Verfahrens wird die erste Applikation als Dispatcher betrieben, welcher Daten mit mehreren zweiten Applikationen mit demselben Applikationskennzeichner (Application ID, AID) austauschen kann.

Ebenso kann die erste Applikation als Proxy betrieben werden, welcher z.B. aus einer Antwort der zweiten Applikation Daten extrahiert. Die erste Applikation kann derart ausgebildet sein, dass sie ein Kommando für die zweite Applikation ändert. Ebenso kann sie dazu ausgebildet sein, dass sie ein Kommando für die zweite Applikation erzeugt. Die erste Applikation kann weiter derart ausgebildet sein, dass sie eine oder mehrere der beschriebenen Varianten durchführen kann.

Das erfindungsgemäße Verfahren zeichnet sich dadurch aus, dass das virtuelle Terminal keine Unterscheidung vornimmt, ob es ein Kommando von einem externen Terminal oder ein Kommando von einer Applikation empfängt, die an eine weitere Applikation weitergeleitet werden soll. Dabei stellt das virtuelle Terminal den Applikationen eine dedizierte Funktion nur zum Senden eines zwischen zwei Applikationen übertragenen Kommandos bereit.

Eine Applikationslogik zur Bedienung der zweiten Applikation wird in der Regel in der ersten Applikation realisiert. In welcher Weise die Logik ausgebildet ist, kommt auf die Aufgaben der beiden Applikationen an. Beispielsweise kann eine erste Applikation die Aufgabe haben, eine Kommunikation für die zweite Applikation zu überwachen und zu einem bestimmten Zeitpunkt Daten aus der Kommunikation zu extrahieren und zu visualisieren. Beispielsweise könnte hierdurch ein abgebuchter Betrag einer Kreditkarte angezeigt werden, ohne die eventuell zugelieferte und evaluierte Kreditkartenapplikation, d.h. die zweite Applikation, zu verändern.

Die Realisierung des erfindungsgemäßen Verfahrens erfolgt insbesondere in Sicherheitsmodulen in Gestalt tragbarer Sicherheitsmodule, insbesondere tragbarer Datenträger (Chipkarten). Hierunter fallen z.B. SIM-Karten, sichere Massenspeicherkarten oder sichere USB-Token, aber auch fest eingebaute Sicherheitsmodule wie TPM (Trusted Platform Module), SAM (Secure Application Module) oder M2M (Machine-to-Machine)-Module. Vorteilhaft ist der Mechanismus auf Sicherheitsmodule anwendbar, in denen Applikationen nachgeladen werden. Ebenso kann der Mechanismus bevorzugt bei solchen Sicherheitsmodulen eingesetzt werden, in denen ein interpreterbasiertes Betriebssystem, wie z.B. Java-Card, MEL (Multos executable language) und dgl. vorhanden ist.

Die Erfindung wird nachfolgend näher anhand von Ausführungsbeispielen in der Zeichnung erläutert. Es zeigen:
- Fig. 1: eine schematische Darstellung der grundlegenden Architektur eines erfindungsgemäßen Sicherheitselements, insbesondere in Gestalt eines tragbaren Datenträgers, in dem der erfindungsgemäße Mechanismus zur Kommunikation zwischen zwei Applikationen implementiert ist,
- Fig. 2: eine schematische Darstellung eines generischen Flussdiagramms, welches das Prinzip des erfindungsgemäßen Mechanismus illustriert,
- Fig. 3: eine schematische Darstellung eines Flussdiagramms, in welchem eine erste Applikation als Proxy ausgestaltet ist,
- Fig. 4: eine schematische Darstellung eines Flussdiagramms, in der die erste Applikation als Dispatcher ausgestaltet ist, und
- Fig. 5: eine schematische Darstellung eines Flussdiagramms, in dem eine Interapplikationskommunikation zwischen erster und zweiter Applikation dargestellt ist.

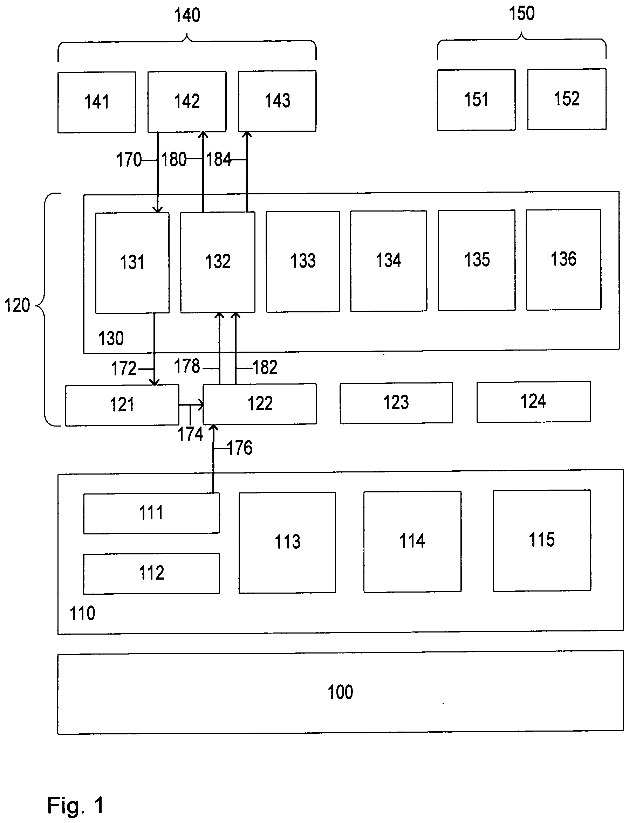

Fig. 1 zeigt eine schematische Darstellung der grundlegenden Architektur eines Sicherheitselements, in dem der erfindungsgemäße Mechanismus zur Kommunikation zwischen zwei Applikationen implementiert ist. In einer dem Fachmann bekannten Weise repräsentiert das Bezugszeichen 110 die Hardware-Plattform des Sicherheitselements. Das Bezugszeichen 110 kennzeichnet das Betriebssystem. Ein Transport-Manager des Betriebssystems 100 ist mit 111 gekennzeichnet. Als Protokolle 112 können beispielsweise T=0, T=1, USB, MMC oder T=CL eingesetzt werden. Mit 113 ist eine Speicher-Managementeinheit ("Memory Management") des Betriebssystems 110 gekennzeichnet. Das Betriebssystem 110 umfasst weiter eine virtuelle Maschine 114, sowie einen kryptographischen Dienst 115. Der kryptographische Dienst 115 kann dazu ausgebildet oder eingerichtet sein, DES, AES, RSA, DSA, ECC, RNG, usw. nutzende Kryptographieverfahren zu verarbeiten.

Das Bezugszeichen 120 kennzeichnet ein in dem Sicherheitselement implementiertes Java-Card System, vorzugsweise eine JAVA-Card virtuelle Maschine. 130 repräsentiert die Applikationsschnittstelle API (Application Programmable Interface). Das Java-Card System 120 umfasst eine virtuelle Schnittstelle ("Virtual Card") 121, einen APDU-Dispatcher 122 sowie weitere Einheiten 123 und 124. Die API 130 umfasst ein virtuelles Terminal 131, ein Java-Card Framework 132, eine Global-Platform Framework 133 und ggf. weitere Komponenten 134, 135 und 136.

Mit dem Bezugszeichen 140 sind Kundenapplikationen, mit dem Bezugszeichen 150 Systemapplikationen, wie beispielsweise eine Issuer Security Domain 152, gekennzeichnet. Als Kundenapplikationen 140 sind lediglich beispielhaft drei Applikationen (sog. User Applets) 141, 142, 143 vorgesehen.

In der vorstehenden Beschreibung sind, sofern für den Fachmann gebräuchlich, die üblichen englischen Begriffe verwendet worden.

Das Sicherheitsmodul verfügt über zumindest eine physische (nicht dargestellte) Schnittstelle zum Empfang von Kommandos von einem externen Terminal (Mobilfunkgerät, Kartenleser, PC, ...). Wie sich aus den weiteren Erläuterungen ergibt, ist die Art der physischen Schnittstelle, z.b. kontaktlos oder kontaktbehaftet, ebenso wie das auf dieser Schnittstelle verwendete Protokoll unabhängig von der vorliegenden Lösung. Der APDU-Dispatcher 122 und das JAVA-Card Framework 132 stellen die herkömmlichen Mittel zum Weiterleiten von - über die physische Schnittstelle des Sicherheitsmoduls empfangenen - Kommandos (APDUs) an eine Applikation 140,150 dar. Insbesondere sind die Weiterleitungsmittel 122,132 vorliegend eingerichtet, um APDUs als Kommandos oberhalb von der Transport- und der Protokollschicht weiterzuleiten.

Die Übertragung von Daten von dem User Applet 142 als erster Applikation zu dem User Applet 143 als zweite Applikation erfolgt durch eine interne Umleitung der zu übertragenden Daten in dem Sicherheitselement. Bei den zu übertragenden Daten handelt es sich insbesondere um ein Kommando für die zweite Applikation, welche durch die zweite Applikation nach Erhalt des Kommandos ausgeführt wird. Die Umleitung des Kommandos erfolgt durch das Sicherheitsmodul intern derart, dass es durch die zweite Applikation als herkömmliches, wie ein von außerhalb des Sicherheitsmoduls erhaltenes Kommando empfangen wird.

Zusätzlich vorgesehen ist nun in dem Sicherheitsmodul ein Umleitungsmittel 121, 131, welches eingerichtet ist, eine von einer ersten Applikation 142 empfangene Kommando (APDU) 170 derart intern umzuleiten 172,174, 178 dass es von einer zweiten Applikation 143 des Sicherheitsmoduls empfangen wird 184. Die zweite Applikation 143 empfängt die intern umgeleitete APDU 184, wie jede andere von außerhalb des Sicherheitsmoduls erhaltene APDU (176, 178, 180).

Das Umleitungsmittel umfasst insbesondere ein virtuelles Terminal 131, welches durch die erste Applikation 142 aufrufbar ist. Es ist besonders vorteilhaft, wenn das virtuelle Terminal 131 das intern umzuleitende Kommando (APDU) über eine virtuelle Schnittstelle 121 an die herkömmlichen Mittel 122,132 zum Weiterleiten von Kommandos an Applikationen 140,150 übergibt. Für die Weiterleitungsmittel 122,132 stellt die virtuelle Schnittstelle 121 eine weitere Schnittstelle dar, von welcher das Sicherheitsmodul Kommandos empfängt. Die virtuelle Schnittstelle 121 wird in dem Sicherheitsmodul wie eine (weitere) physische Schnittstelle verwaltet.

Der APDU-Dispatcher 122 wird vorzugsweise eine Antwort der Anwendung 143 auf das Kommando 184 von der virtuellen Schnittstelle 121 (bzw. den Umleitungsmitteln 121,131) entsprechend wieder an die virtuelle Schnittstelle 121 (bzw. die Umleitungsmittel 121,131) weitergeben. Die Antwort der zweiten Applikation 143 kann das virtuelle Terminal 131 somit der ersten Applikation 142 wieder zur Verfügung stellen.

Die bei einer solchen internen Umleitung beteiligten Komponenten sind demnach das Card Terminal 131, das von dem User Applet 142 ein Kommando empfängt (170). Das Card Terminal 131, das ein virtuelles Terminal darstellt, leitet das Kommando an die virtuelle Schnittstelle (Virtual Card 121) weiter (172). Nach Empfang (174) und Verarbeitung des Kommandos durch den Dispatcher 122 - vorzugsweise unter Steuerung des Transport-Managers 111, wird das Kommando über das Java-Card Framework 132 an das User Applet 143 als zweite Applikation weitergeleitet (vgl. Bezugszeichen 182, 184). Gleichfalls werden entsprechende Informationen ebenfalls über das Java-Card Framework 132 an das User Applet 142 transferiert (Bezugszeichen 178, 180).

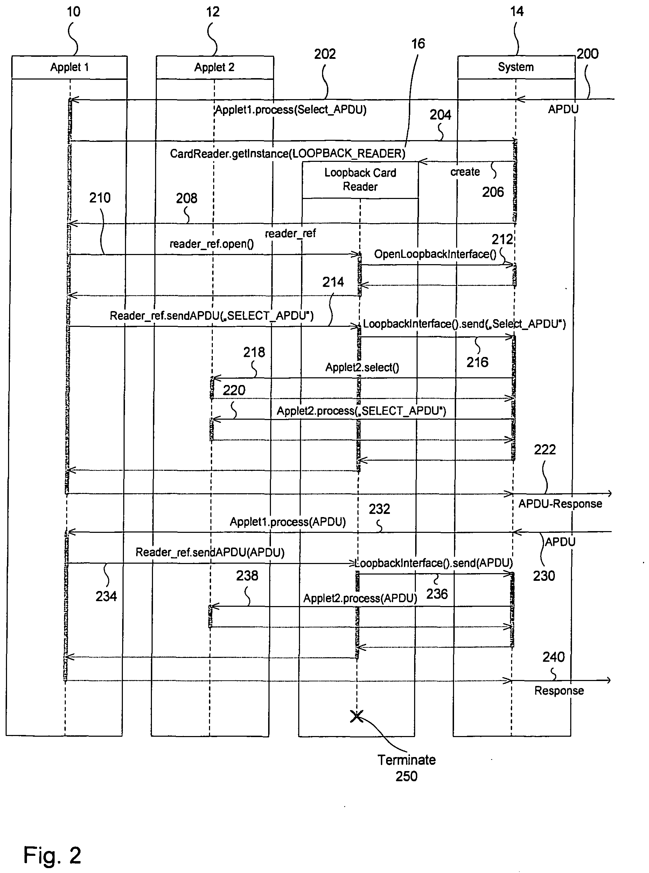

In den nachfolgend beschriebenen Fig. 2 bis 4 sind schematisch Flussdiagramme dargestellt, die das erfindungsgemäße Vorgehen innerhalb des Sicherheitsmoduls veranschaulichen.

Fig. 2 zeigt dabei ein generisches Flussdiagramm. Als Komponenten sind als erste Applikation 10 ein Applet 1, als zweite Applikation 12 ein Applet 2, das Betriebssystem 14 (System) des Sicherheitsmoduls und ein virtuelles Terminal 16, der als Loop Back Card Reader bezeichnet ist, des Sicherheitsmoduls beteiligt. Die zwischen den beteiligten Komponenten transferierten Kommandos werden zeitlich aufeinander folgend von oben nach unten ausgeführt. Die Vorgehensweise wird dabei anhand eines Java-Card Systems, das bereits in Fig. 1 beschrieben wurde, illustriert. Das virtuelle Terminal 16 ist zugleich virtuelle Schnittstelle für das System 14. Prinzipiell sind die Erfindung und deren Vorgehensweise allgemein auf solche Sicherheitsmodule anwendbar, in denen ein interpreterbasiertes Betriebssystem verwendet wird. Neben Java-Card ist dies bspw. MEL.

Das mit den Bezugszeichen 200 bis 222 gekennzeichnete Vorgehen beschreibt eine Selektion einer Applikation auf der JAVA-Card bzw. ein Ansprechen der Java-Card. Der eigentliche Austausch von Daten, d.h. das Übertragen eines Kommandos von der ersten Applikation 10 zur zweiten Applikation 12, erfolgt dann in den Schritten 230 bis 240.

Mit dem Bezugszeichen 200 ist der Empfang einer Kommando-APDU durch das System 14 gekennzeichnet. Das System 14 sendet in Schritt 202 nach Erhalt der Kommando APDU das Kommando "Applet1.process(Select_APDU)" an die erste Applikation 10.

Im Schritt 204 überträgt die erste Applikation 10 ein Kommando ("CardReader.getInstance(LOOPBACK_READER)"), mit welcher die erste Applikation 10 das externe Terminal ansprechen möchte. In Schritt 206 ("create") erzeugt das System 14 das virtuelle Terminal 16, das als Loop Back Card Reader bezeichnet wird. In Schritt 208 übermittelt das System 14 einen Kennzeichner ("reader_ref") der ersten Applikation 10. In Schritt 210 spricht die erste Applikation 10 das virtuelle Terminal 16 an, indem das Kommando "reader_ref.open()" übermittelt wird. In Schritt 212 wird die Schnittstelle des virtuellen Terminals aktiviert ("OpenLoopbackInterface()"). Die Schritte 204 bis 212 sind insofern optionale Schritte als dass das virtuelle Terminal 16 nicht notwendigerweise wie dargestellt erst gestartet und/oder deren Referenz bekannt gegeben werden muss. Das virtuelle Terminal 16 kann auf dem Sicherheitsmodul alternativ ständig unter bekanntem Namen (Referenz) ausgeführt werden oder bereits zuvor gestartet worden sein.

Das empfangene Kommando SELECT_APDU wurde in Schritt 200 von dem System 14 an die erste Applikation 10 übertragen. In Schritt 214 wird diese Kommando an die APDU-Schnittstelle mit dem Aufruf "Reader_ref.sendAPDU("SELECT_APDU")" übertragen. Das virtuelle Terminal 16 leitet das Kommando "LoopbackInterface ().send("Select_APDU")" an das System 14 um. Das System 14 wählt im Schritt 218 die zweite Applikation 12 aus ("Applet2.select()"). Nach einer entsprechenden Antwort der zweiten Applikation 12 überträgt das System 14 in Schritt 220 das Kommando mit einem Aufruf "Applet2.process("SELECT_APDU")" an die zweite Applikation 12. Eine entsprechende Antwort der zweiten Applikation wird durch diese an das System 14, von dem System 14 an das virtuelle Terminal 16 und von diesem an die erste Applikation 10 übertragen. Schließlich wird als Antwort auf die Kommando-APDU eine "APDU-response" in Schritt 222 von dem System 14 an das externe Terminal übertragen.

In Schritt 230 empfängt das System 14 eine Kommando-APDU von dem externen Terminal. In Schritt 232 wird das empfangene Kommando ("Applet1.process(APDU)") an die erste Applikation 10 weitergeleitet. Zur Verarbeitung des Kommandos ist auch die zweite Applikation 12 erforderlich. In Schritt 234 ruft die erste Applikation 10 hierzu eine Umleitungsfunktion des virtuellen Terminals 16 auf "Reader_ref.sendAPDU(APDU)". Das virtuelle Terminal 16 leitet in den Schritten 236 und 238 über das System 14 das Kommando zur zweiten Applikation 12 um. Hierzu werden die virtuelle Schnittstelle "LoopbackInterface().send(APDU)" und dann der herkömmliche Weg zur Kommandoweiterleitung "Applet2.process(APDU)" verwendet, welche die zweite Applikation zur Verarbeitung des Kommandos veranlasst. Eine entsprechende Antwort der zweiten Applikation 12 auf das Kommando wird von dieser an das System 14 übermittelt, welche die Antwort an das virtuelle Terminal 16 für die Weiterleitung an die erste Applikation 10 überträgt. Eine entsprechende Antwort "response" wird in Schritt 240 an das externe Terminal übertragen. Nach Beendigung der Transaktion wird in Schritt 250 das virtuelle Terminal 16 beendet ("terminate").

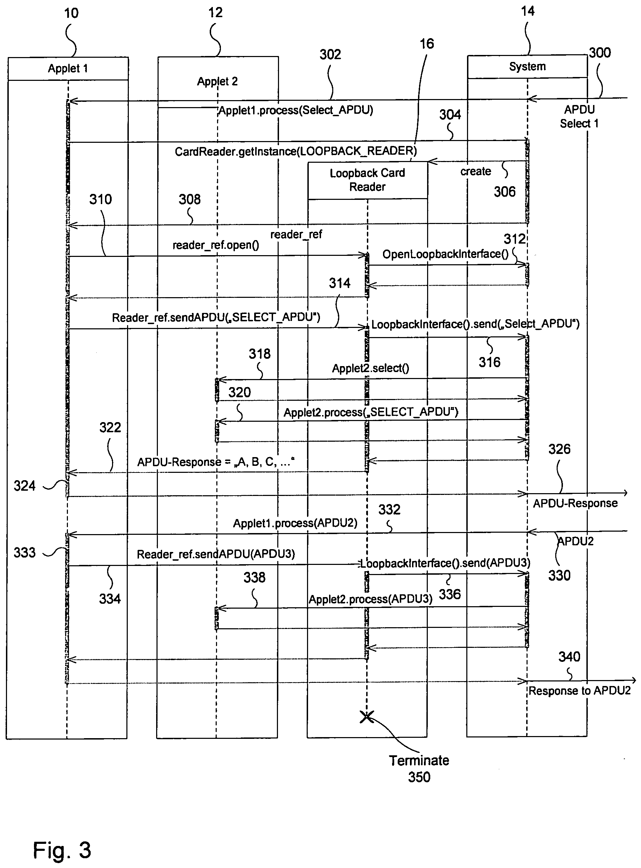

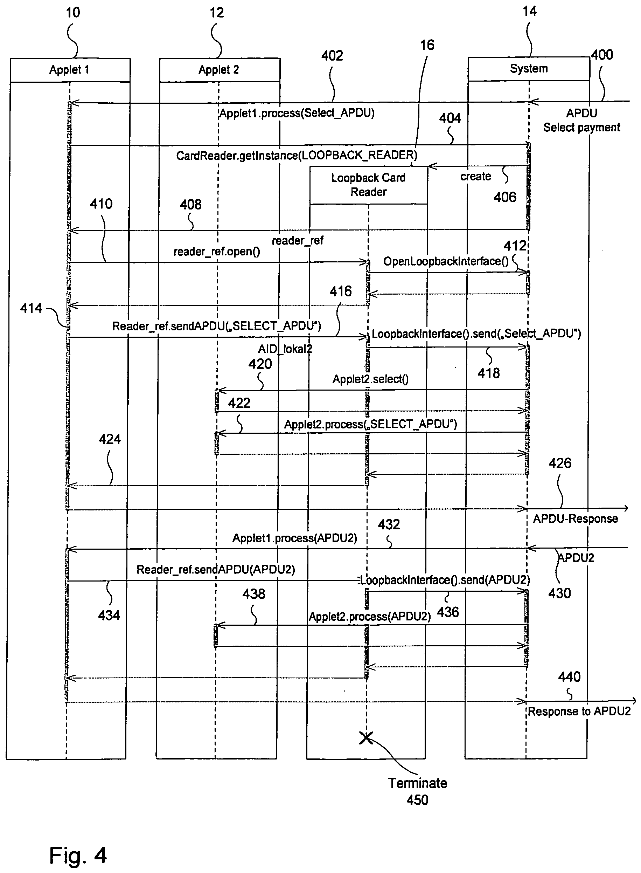

In den Fig. 3 bis 5 werden nun spezifische Anwendungen des erfindungsgemäßen Prinzips beschrieben. Wie in Verbindung mit Fig. 2 erläutert, erfolgt in den Beispielen der Fig. 3 und Fig. 4 dabei zunächst ein Auswahlvorgang zur Aktivierung der APDU-Schnittstelle. Anschließend werden jeweilige Aktionen durchgeführt. Zur Vereinfachung der Beschreibung werden nachfolgend jeweils nur die Unterschiede in den zwischen den einzelnen Komponenten übertragenen Kommandos im Vergleich zur Fig. 2 erläutert, welche das grundsätzliche Vorgehen zeigt.

Im Ausführungsbeispiel gemäß Fig. 3 übernimmt die erste Applikation 10 die Funktion eines Proxy, welcher verschiedene Funktionen durchführen kann. In der Phase des Auswahlvorgangs und Aktivierung der APDU-Schnittstelle der zweiten Applikation 12 überträgt das System 14 in Schritt 322 eine APDU-Response der zweiten Applikation 12 an die erste Applikation 10. Hierbei umfasst die APDU-Response beispielhaft die Daten A, B und C. Die erste Applikation 10 ist angepasst, aus der APDU-Response der zweiten Applikation Daten B zu extrahieren und in Schritt 324 als Information für den Benutzer anzuzeigen. Beispielsweise kann ein bestimmter Betrag B einer Bezahlfunktion auf einem Display des Sicherheitsmoduls dargestellt werden. Anschließend erfolgt die bereits beschriebene APDU-Response an das externe Terminal in Schritt 326. Die APDU-Response "A, B, C ..." der zweiten Applikation 12 wird von der ersten Applikation 10 - in diesem Beispiel unverändert - an das externe Terminal ausgegeben.

In einer alternativen oder ergänzenden Zusatzfunktionalität als Proxy kann die erste Applikation 10 in Schritt 333 eine Änderung der in dem Kommando APDU2 enthaltenen Daten vornehmen. Nach Erhalt eines entsprechenden externen Kommandos APDU2 vom System 14 über den Aufruf "Applet1. process(APDU2)" in Schritt 332 kann das Kommando insbesondere in seiner Kommandokodierung und evtl. sogar in seinem Datenanteil verändert werden. Beispielsweise ändert die erste Applikation 10 das APDU-Kommando APDU2 in ein APDU3-Kommando. Alternativ oder zusätzlich kann eine beliebige Verarbeitung von APDU2 vor der Weiterleitung erfolgen. Hier kann die erste Applikation 10 die APDU3 über das System 14 in den Schritten 334 und 336 an die zweite Applikation 12 senden, um dann in Schritt 340 eine Antwort auf die APDU2 an das System 14 zu übertragen.

Alternativ kann in Schritt 333 auch darauf verzichtet werden, APDU2 zu verändern oder an die zweite Applikation 12 weiterzuleiten. Mit Erhalt der APDU2 erzeugt die erste Applikation 10 bspw. die APDU3 und sendet diese in den Schritten 334, 336, 338 an die zweite Applikation. Dies erfolgt, wie beschrieben, durch die Umleitung über das virtuelle Terminal 16, sodass das von der zweiten Applikation 12 empfangene APDU-Kommando wie ein herkömmliches APDU-Kommando verarbeitet werden kann.

Im Ausführungsbeispiel der Fig. 4 wird die erste Applikation 10 als Dispatcher betrieben, welcher selektiv das empfangene Kommando an eine von mehreren gleichartigen zweiten Applikationen 12 verteilt. Im Gegensatz zu dem bereits im System 14 vorhandenen Dispatcher, der das Kommando an die vom externen Terminal ausgewählte und mit der AID als Applikationskennzeichner adressierte Applikation leitet, wählt die Dispatcher-Applikation selbst eine der Applikationen 12 aus. Die mehreren Applikationen 12 sind alle geeignet die applikationsspezifischen Kommandos, für die vom externen Terminal gewählte und mit der AID angegebene Applikation, zu verarbeiten. Die Dispatcher-Applikation 10 ist bei dem System 14 stellvertretend für alle Applikationen 12 mit dem Applikationskennzeichner AID registriert. In Figur 4 ist dargestellt die Selektion einer Payment-Applikation durch das Kommando 400 (mit AID = Payment). Die dargestellte Applikation 12 ist eine von mehreren gleich wirkenden Payment-Applikationen. Beispielsweise können die mehreren Applikationen 12 unterschiedliche Versionen der gleichen Applikation darstellen. Ebenso könnten die Applikationen von unterschiedlichen Anbietern stammen. Die mehreren Applikationen 12 können intern durch lokale, einem externen Terminal nicht bekannt gemachte, Applikationsbezeichner AID_lokal1, AID_lokal2 ... angesprochen werden.

In Schritt 414 wählt die Dispatcher-Applikation 10 eine der mehreren Applikationen aus und leitet das Kommando, in diesem Fall zunächst das Select-Kommando, an die ausgewählte Applikation 12 weiter. In den Schritten 416 418, 420 und 422 wird entsprechend das Select-Kommando an die ausgewählte Applikation 12 mit dem lokalen (oder internen) Applikationsbezeichner AID_lokal2 übertragen.

Die Auswahl kann bspw. nach einer entsprechenden Vorgabe erfolgen. Alternativ oder ergänzend kann die Auswahl mit Hilfe zumindest eines proaktiven Steuerkommandos (SIM Toolkit) durch Benutzerauswahl erfolgen. Anschließend an die Auswahl wird in Schritt 416 der lokale Kennzeichner "AID_lokal2" mit dem entsprechenden Aufruf an das System 14 übertragen.

Alle weiteren vom externen Terminal empfangenen Kommandos 430, wie das Kommando APDU2, werden von der Dispatcher-Applikation 10 transparent, d.h. unverändert, an die ausgewählte Applikation 12 weiter geleitet. Dieses Vorgehen ist bspw. dann hilfreich, wenn mehrere gleichartige Applikationen in dem Sicherheitsmodul vorhanden sind. Ihnen wird jeweils ein unterschiedlicher lokaler Applikationskennzeichner "AID_lokal x" zugeordnet, wobei ein x eine bestimmte Applikation kennzeichnet. In diesem Fall ist es für das externe Terminal nicht erforderlich, Kenntnis über die für den (Bezahl-)Vorgang zu verwendende Applikation zu haben, da die entsprechende Auswahl durch die erste Applikation 10 erfolgt.

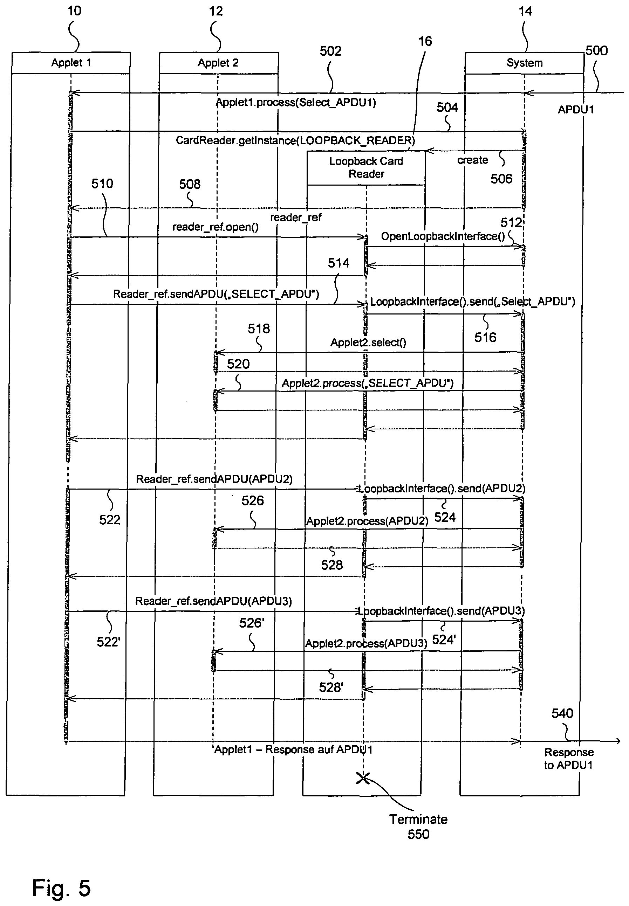

Im Ausführungsbeispiel gemäß Fig. 5 erfolgt eine Interapplikationskommunikation.

Diese ist bspw. in Anwendungen sinnvoll, in denen die erste Applikation 10 nur in der Lage ist, einen Teil der von dem externen Terminal initiierten Anfrage zu bearbeiten. Um eine vollständige Bearbeitung vornehmen zu können, bedient sich die erste Applikation 10 der Funktionalität der zweiten Applikation 12. Beispielsweise kann die zweite Applikation 12 ein Applet zur Generierung einer Signatur für Daten der ersten Applikation 10 umfassen. Ebenso könnte es sich bei der zweiten Applikation 12 um ein Börsenapplet handeln, welches zur Durchführung der von der ersten Applikation 10 abgearbeiteten Kommandos einen Wert X von der Börse abbucht.

Im Gegensatz zu den vorangegangenen Ausführungsbeispielen in den Fig. 2 bis 4 erfolgt hier kein zweistufiger Ablauf mit einem vorgeschalteten Auswahlvorgang zur Aktivierung der APDU-Schnittstelle der zweiten Applikation, dessen Erfolg dem externen Terminal bestätigt wird (siehe 222, 326, 426). Nach Erhalt einer Kommando-APDU1 in Schritt 500 wird durch das System 14 und das virtuelle Terminal 16 eine interne Umleitung der zwischen den beiden Applikationen 10, 12 übertragenen Daten vorgenommen, sodass (erst) in Schritt 540 eine Antwort auf die Kommando-APDU1 an das externe Terminal übertragen wird ("Response to APDU1").

In dem in Fig. 5 dargestellten Ausführungsbeispiel erfolgt dabei beispielhaft eine zweimalige für das externe Terminal nicht sichtbare Interkommunikation mittels APDU2 und APDU3 zwischen den Applikationen 10, 12. Die zwischen der ersten und der zweiten Applikation 12 für die APDU2 ausgetauschten Kommandos sind mit den Bezugszeichen 522 bis 528 gekennzeichnet. Die die APDU3 betreffenden Kommandos sind zusätzlich mit einem" '" bei gleicher Nummerierung gekennzeichnet.

Prinzipiell kann zur Verarbeitung der Kommando-APDU1 eine beliebige Anzahl an Kommunikationen zwischen den Applikationen 10, 12 erfolgen.

Wie aus der vorangegangenen Beschreibung ersichtlich wurde, sind zur Realisierung des vorgeschlagenen Mechanismus an einem Java-Card-Betriebssystem die folgenden Änderungen bzw. Erweiterungen erforderlich: zumindest eine Applikation ist angepasst eine interne Umleitung (virtuelles Terminal) aufzurufen. Darüber hinaus ist die Implementierung eines virtuellen Terminals erforderlich und deren Anbindung - beispielsweise als eine virtuelle Schnittstelle - an die herkömmlichen Weiterleitungsmittel für empfangene, externe Kommandos. Dabei gibt das virtuelle Terminal empfangene Kommandos über die virtuelle Schnittstelle an das Betriebssystem zurück. Das Betriebssystem sollte angepasst sein, das virtuelle Terminal gegebenenfalls erst zu aktivieren. Insbesondere sollte das Betriebsystem eine Umschaltung zwischen verschiedenen, parallel aktiven Schnittstellen unterstützen. Somit kann das System die Applikation 10 über die physische Schnittstelle zum externen Terminal und die Applikation 12 über die virtuelle Schnittstelle nacheinander ausführen.

Mittels der Implementierung ist eine Interapplikationskommunikation über die APDU-Schnittstelle und die Nutzung des CoD-Speichers möglich. Es können mehrere Applikationen mit demselben (lokalen) Applikationskennzeichner auf einem Sicherheitsmodul mittels eines Dispatcher-Applets gehandhabt werden. Darüber hinaus ist das Durchschleusen von Kommandos durch ein "Proxy"-Applet möglich, um zusätzliche Funktionen erzielen zu können, ohne ein originales Applet zu verändern. Hierdurch kann eine Reevaluierung von Applikationen vermieden werden. Das Vorgehen ist damit für solche Sicherheitsmodule von Interesse, in welchen Applikationen nachgeladen werden können.

## Patentansprüche

1. Verfahren zum Betreiben eines Sicherheitsmoduls, mit den Schritten:
- Übertragen von Daten von einer ersten Applikation (10) zu einer zweiten Applikation (12) in dem Sicherheitsmodul;
- Verwenden der übertragenen Daten in der zweiten Applikation (12); wobei
- die übertragenen Daten ein Kommando für die zweite Applikation (12) umfassen;
- die zweite Applikation (12) das Kommando in dem Schritt des Verwendens ausführt;
- in dem Schritt des Übertragens
-- die erste Applikation (10) eine interne Umleitung zu der zweiten Applikation (12) aufruft, und
-- das Sicherheitsmodul das Kommando intern so umleitet, dass es durch die zweite Applikation (12) als herkömmliches, wie ein von außerhalb des Sicherheitsmoduls erhaltenes Kommando empfangen wird;
wobei ein externes Kommando über eine physische Schnittstelle des Sicherheitsmoduls empfangen wird; und
wobei die erste Applikation (10)
- die zweite Applikation als eine von mehreren zweiten Applikationen (12) auswählt und das externe Kommando als das Kommando an die ausgewählte zweite Applikation (12) weiterleitet, und/oder
- eine Antwort der zweiten Applikation auf das Kommando als Antwort auf das externe Kommando über die physische Schnittstelle ausgibt.

2. Verfahren nach Anspruch 1, **dadurch gekennzeichnet, dass** das von der zweiten Applikation (12) empfangene Kommando wie das herkömmliche Kommando durch die zweite Applikation (12) verarbeitet wird.

3. Verfahren nach Anspruch 1 oder 2, **dadurch gekennzeichnet, dass** das Kommando an einer APDU-Schnittstelle der zweiten Applikation (12) empfangen wird.

4. Verfahren nach einem der vorhergehenden Ansprüche, **dadurch gekennzeichnet, dass** APDU-Schnittstellen der ersten und der zweiten Applikation (10, 12) parallel aktiv sind, über welche das Kommando von der ersten an die zweite Applikation (10, 12) übertragen wird.

5. Verfahren nach einem der vorhergehenden Ansprüche, **dadurch gekennzeichnet, dass** die interne Umleitung des Kommandos über ein virtuelles Terminal (16) des Sicherheitsmoduls erfolgt, welche das von der ersten Applikation (10) empfangene Kommando über eine virtuelle Schnittstelle an die zweite Applikation (12) sendet.

6. Verfahren nach einem der Ansprüche 1 bis 5, **dadurch gekennzeichnet, dass** die erste Applikation (10) als Proxy betrieben wird, welcher aus einer Antwort der zweiten Applikation (12) Daten extrahiert.

7. Verfahren nach einem der Ansprüche 1 bis 6, **dadurch gekennzeichnet, dass** die erste Applikation (10) als Proxy betrieben wird, welcher ein empfangenes Kommando für die zweite Applikation (12) ändert.

8. Verfahren nach einem der Ansprüche 1 bis 7, **dadurch gekennzeichnet, dass** die erste Applikation (10) als Proxy betrieben wird, welcher ein Kommando für die zweite Applikation (12) erzeugt.

9. Sicherheitsmodul mit einer physischen Schnittstelle zu einem externen Terminal und einem Betriebssystem (14) zur Ausführung von Applikationen (10, 12), wobei das Sicherheitsmodul angepasst ist, eine Kommunikation zwischen den Applikationen zu unterstützen, wobei
- das Betriebssystem (14) des Sicherheitsmoduls ein internes, virtuelles Terminal (16) aufweist;
- das Sicherheitsmodul die Kommunikation zwischen den Applikationen (10, 12) auf dem Sicherheitsmodul durch das virtuelle Terminal (16) ermöglicht; und
eine erste Applikation (10)
- eine zweite Applikation als eine von mehreren zweiten Applikationen (12) auswählt und ein über die physische Schnittstelle empfangenes externes Kommando an die ausgewählte zweite Applikation (12) weiterleitet, und/oder
- eine Antwort der zweiten Applikation auf das Kommando als Antwort auf das externe Kommando über die physische Schnittstelle ausgibt.

10. Sicherheitsmodul nach Anspruch 9, **dadurch gekennzeichnet, dass** das interne, virtuelle Terminal (16) für eine erste der Applikationen, welche im Rahmen der Kommunikation Daten, insbesondere umfassend ein Kommando für eine zweite der Applikationen, an das virtuelle Terminal sendet, wie ein außerhalb des Sicherheitsmodul angeordnetes Terminal ansprechbar ist.

11. Sicherheitsmodul nach Anspruch 9 oder 10, **dadurch gekennzeichnet, dass** das Sicherheitsmodul für die Kommunikation zwischen den Applikationen (10, 12) auf dem Sicherheitsmodul eine virtuelle Schnittstelle (121) umfasst.

12. Sicherheitsmodul nach Anspruch 11, **dadurch gekennzeichnet, dass** die virtuelle Schnittstelle (121) in dem Betriebssystem (14) wie eine physische Schnittstelle des Sicherheitsmoduls verwaltet wird.

13. Sicherheitsmodul nach einem der Ansprüche 9 bis 12, **dadurch gekennzeichnet, dass** dieses dazu eingerichtet ist, die Schritte des Verfahren gemäß einem der Ansprüche 1 bis 8 durchzuführen.

## Claims

1. A method for operating a security module, having the steps of:
- transferring of data from a first application (10) to a second application (12) in the security module;
- employing the transferred data in the second application (12); wherein
- the transferred data include a command for the second application (12);
- the second application (12) executes the command in the step of employing;
- in the step of transferring
-- the first application (10) calls an internal re-routing to the second application (12), and
-- the security module re-routes the command internally such that it is received by the second application (12) as a conventional command like one received from outside of the security module;
wherein an external command is received via a physical interface of the security module; and
wherein the first application (10)
- selects the second application as one of several second applications (12) and forwards the external command as the command to the selected second application (12), and/or
- outputs via the physical interface a response of the second application to the command as a response to the external command.

2. The method according to claim 1, **characterized in that** the command received by the second application (12) is processed by the second application (12) like the conventional command.

3. The method according to claim 1 or 2, **characterized in that** the command is received at an APDU interface of the second application (12).

4. The method according to any of the preceding claims, **characterized in that** APDU interfaces of the first and the second application (10, 12) are active in parallel, via which the command is transferred from the first to the second application (10, 12).

5. The method according to any of the preceding claims, **characterized in that** the internal re-routing of the command is effected via a virtual terminal (16) of the security module, which sends the command received from the first application (10) via a virtual interface to the second application (12).

6. The method according to any of claims 1 to 5, **characterized in that** the first application (10) is operated as a proxy, which extracts data from a response of the second application (12).

7. The method according to any of claims 1 to 6, **characterized in that** the first application (10) is operated as a proxy, which changes a received command for the second application (12).

8. The method according to any of claims 1 to 7, **characterized in that** the first application (10) is operated as a proxy, which generates a command for the second application (12).

9. A security module with a physical interface to an external terminal and an operating system (14) for executing applications (10, 12), wherein the security module is adapted to support a communication between the applications, wherein
- the operating system (14) of the security module has an internal, virtual terminal (16);
- the security module permits the communication between the applications (10, 12) on the security module through the virtual terminal (16); and
a first application (10)
- selects a second application as one of several second applications (12) and forwards an external command received via the physical interface to the selected second application (12), and/or
- outputs via the physical interface a response of the second application to the command as a response to the external command.

10. The security module according to claim 9, **characterized in that** the internal, virtual terminal (16) is addressable like a terminal disposed outside of the security module by a first one of the applications, which, within the scope of the communication, sends data to the virtual terminal, said data in particular including a command for a second one of the applications.

11. The security module according to claim 9 or 10, **characterized in that** the security module includes a virtual interface (121) for the communication between the applications (10, 12) on the security module.

12. The security module according to claim 11, **characterized in that** the virtual interface (121) is managed in the operating system (14) like a physical interface of the security module.

13. The security module according to any of claims 9 to 12, **characterized in that** said security module is arranged to execute the steps of the method in accordance with any of claims 1 to 8.

## Revendications

1. Procédé de fonctionnement d'un module de sécurité, comprenant les étapes :
- transmission de données d'une première application (10) à une deuxième application (12) dans le module de sécurité ;
- utilisation des données transmises dans la deuxième application (12) ;
cependant que
- les données transmises comprennent une instruction pour la deuxième application (12) ;
- la deuxième application (12) exécute l'instruction lors de l'étape de l'utilisation ;
- lors de l'étape de la transmission
-- la première application (10) appelle un réacheminement interne vers la deuxième application (12), et
-- le module de sécurité réachemine de manière interne l'instruction de telle sorte qu'elle est reçue par la deuxième application (12) en tant qu'instruction ordinaire telle que reçue depuis l'extérieur du module de sécurité ;
cependant qu'une instruction externe est reçue par l'intermédiaire d'une interface physique du module de sécurité ; et
cependant que la première application (10)
- sélectionne la deuxième application en tant qu'une de plusieurs deuxièmes applications (12) et retransmet l'instruction externe en tant que l'instruction à la deuxième application (12) sélectionnée, et/ou
- émet une réponse de la deuxième application à l'instruction en tant que réponse à l'instruction externe par l'intermédiaire de l'interface physique.

2. Procédé selon la revendication 1, **caractérisé en ce que** l'instruction reçue par la deuxième application (12) est, comme l'instruction ordinaire, traitée par la deuxième application (12).

3. Procédé selon la revendication 1 ou 2, **caractérisé en ce que** l'instruction est reçue à une interface APDU de la deuxième application (12).

4. Procédé selon une des revendications précédentes, **caractérisé en ce que** des interfaces APDU de la première et de la deuxième application (10, 12) sont parallèlement actives, par l'intermédiaire desquelles l'instruction est transmise de la première à la deuxième application (10, 12).

5. Procédé selon une des revendications précédentes, **caractérisé en ce que** le réacheminement interne de l'instruction a lieu par l'intermédiaire d'un terminal (16) virtuel du module de sécurité, ledit réacheminement envoyant l'instruction reçue par la première application (10) par l'intermédiaire d'une interface virtuelle à la deuxième application (12).

6. Procédé selon une des revendications de 1 à 5, **caractérisé en ce que** la première application (10) est exploitée en tant que proxy qui, à partir d'une réponse de la deuxième application (12), extrait des données.

7. Procédé selon une des revendications de 1 à 6, **caractérisé en ce que** la première application (10) est exploitée en tant que proxy qui modifie une instruction reçue pour la deuxième application (12).

8. Procédé selon une des revendications de 1 à 7, **caractérisé en ce que** la première application (10) est exploitée en tant que proxy qui génère une instruction pour la deuxième application (12).

9. Module de sécurité doté d'une interface physique vers un terminal externe et d'un système d'exploitation (14) pour l'exécution d'applications (10, 12), cependant que le module de sécurité est adapté à assister une communication entre les applications,
cependant que
- le système d'exploitation (14) du module de sécurité comporte un terminal (16) virtuel interne ;
- le module de sécurité permet la communication entre les applications (10, 12) sur le module de sécurité par le terminal (16) virtuel ; et
une première application (10)
- sélectionne une deuxième application en tant qu'une de plusieurs deuxièmes applications (12) et retransmet une instruction externe reçue par l'intermédiaire de l'interface physique à la deuxième application (12) sélectionnée, et/ou
- émet une réponse de la deuxième application à l'instruction en tant que réponse à l'instruction externe par l'intermédiaire de l'interface physique.

10. Module de sécurité selon la revendication 9, **caractérisé en ce que** le terminal (16) virtuel interne, pour une première des applications qui, dans le cadre de la communication, envoie des données, en particulier comprenant une instruction pour une deuxième des applications, au terminal virtuel, est adressable comme un terminal agencé à l'extérieur du module de sécurité.

11. Module de sécurité selon la revendication 9 ou 10, **caractérisé en ce que** le module de sécurité comprend, pour la communication entre les applications (10, 12), sur le module de sécurité terminal une interface (121) virtuelle.

12. Module de sécurité selon la revendication 11, **caractérisé en ce que** l'interface (121) virtuelle est gérée dans le système d'exploitation (14) comme une interface physique du module de sécurité.

13. Module de sécurité selon une des revendications de 9 à 12, **caractérisé en ce que** ce dernier est conçu pour effectuer les étapes du procédé selon une des revendications de 1 à 8.
